# EUROPEAN PATENT APPLICATION

(11) **EP 2 319 748 A1**
(43) Date of publication of application: **11.05.2011**
(21) Application number: 10190046.2
(22) Date of filing: 04.11.2010
(51) Int. Cl.: B62J 6/00, B62J 6/02, B62K 21/12, B62K 21/26

(54) **Illuminating bicycle auxiliary handle**

(30) Priority: 05.11.2009 TW 098220463
(71) Applicant: China Motor Corporation, Sec.2, Da'an Dist Taipei (CN)
(72) Inventor: Yang, Hung-Ching, 326, Taoyuan (TW); Lin, Chen-An, 326, Taoyuan (TW); Wang, Chun-Chin, 326, Taoyuan (TW)
(74) Representative: Stöckeler, Ferdinand

(57) **Abstract**

An illuminating bicycle auxiliary handle includes a handle body (1) that has a clamp portion (11) adapted for attachment to a handle bar (200) of a bicycle, and a grip portion (12). A battery mounting chamber (21) is disposed inside the handle body (1) between two opposite ends of the handle body (1). A headlight (31) is mounted inside the handle body (1) near one end of the handle body (1) opposite to the clamp portion (11). A headlight switch (32) is disposed on the handle body (1) at the end opposite to the clamp portion (11) and is connected electrically to the headlight (31).

## Description

This invention relates to a bicycle, more particularly to an illuminating bicycle auxiliary handle.

It is a common practice for bicycle riders to install multiple bicycle lights on a bicycle for providing continuous illumination or flashing of warning light sources to enhance his riding safety.

However, during riding, it is not easy to synchronously turn on or off the bicycle lights, or to switch between different bicycle lighting modes. As such, it is rather inconvenient to use these bicycle lights. Moreover, one of requirements for bicycling, or hiking is reduction of the weight of the overall bicycle equipment. In view of this, convenient and safe bicycle lights for use by a bicycle rider are highly desired at present.

An object of the present invention is to provide an illuminating bicycle auxiliary handle that incorporates bicycle lights and that can overcome the drawbacks encountered in the prior art.

According to the invention, an illuminating bicycle auxiliary handle comprises a handle body, a battery mounting chamber, a headlight, and a headlight switch. The handle body has two opposite ends, a clamp portion disposed at one of the ends and adapted for attachment to a handle bar of a bicycle, and a grip portion disposed between the opposite ends. The battery mounting chamber is disposed inside the handle body between the opposite ends. The headlight is mounted inside the handle body proximate to the other end of the handle body. The headlight switch is disposed on the handle body proximate to the other end of the handle body and connected electrically to the headlight.

Other features and advantages of the present invention will become apparent in the following detailed description of the preferred embodiments with reference to the accompanying drawings, of which:
Fig. 1 is an exploded view of a first preferred embodiment of an illuminating bicycle auxiliary handle according to the present invention;
Fig. 2 is a perspective view of the first preferred embodiment and a bicycle handle bar;
Fig. 3 illustrates that a headlight of the first preferred embodiment is emitting light;
Fig. 4 illustrates that a turning light of the first preferred embodiment is emitting light;
Fig. 5 is a side view of a second preferred embodiment of an illuminating bicycle auxiliary handle according to the present invention; and
Fig. 6 is another side view of the second first preferred embodiment.

Before the present invention is described in greater detail with reference to the accompanying preferred embodiments, it should be noted herein that like elements are denoted by the same reference numerals throughout the disclosure.

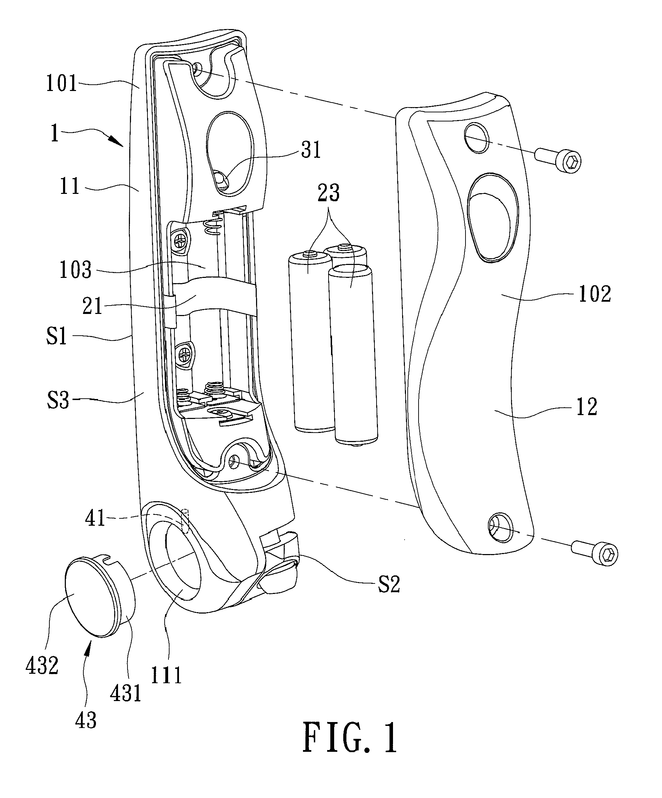

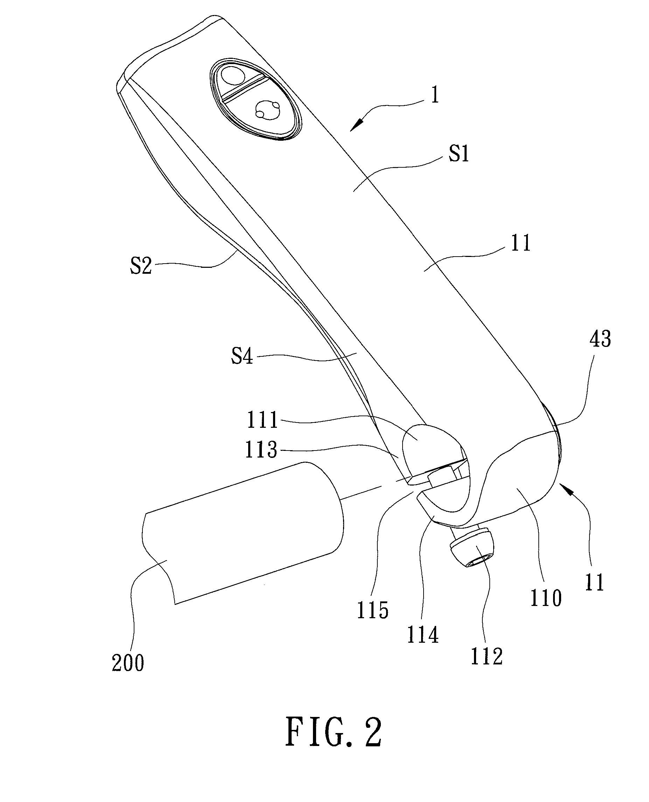

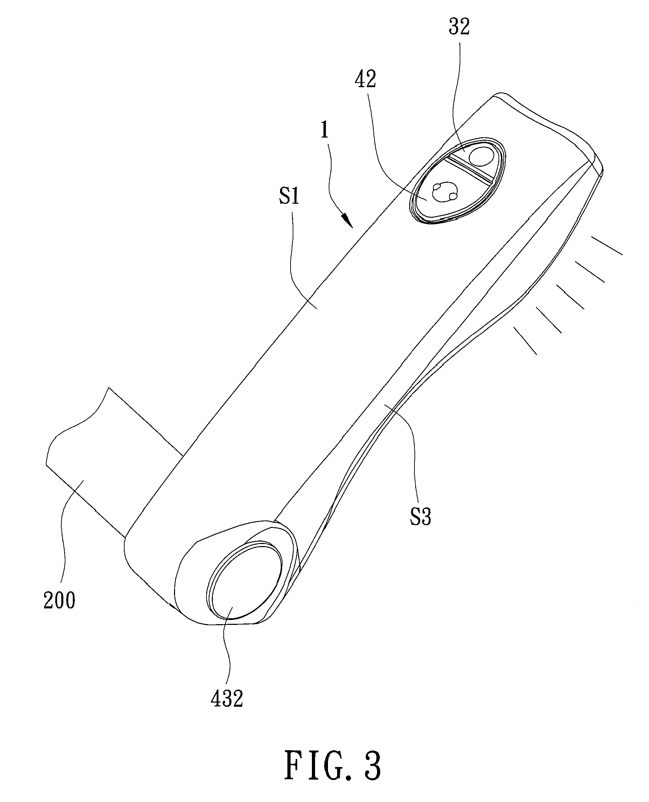

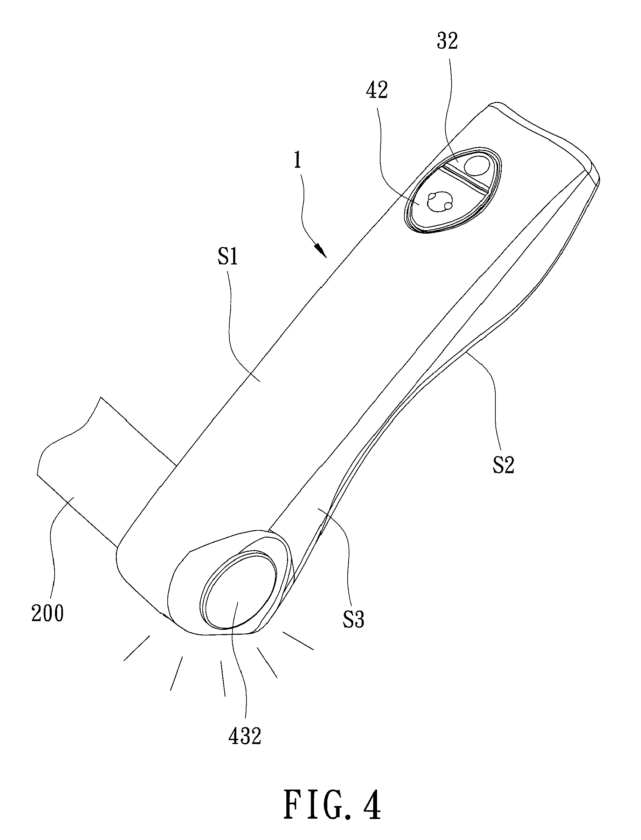

Referring to Figures 1 to 4, a first preferred embodiment of a bicycle auxiliary handle according to the present invention is shown to include a handle body 1, a battery mounting chamber 21, a headlight 31 and a turning light 41.

The handle body 1 has two opposite ends, a clamp portion 11 disposed at one of the ends and adapted for attachment to a handle bar 200 of a bicycle, and a grip portion 12 disposed between the opposite ends. The handle body 1 further has first and second opposite sides (S1, S2) connected between the opposite ends of the handle body 1, and third and fourth opposite sides (S3, S4) interconnecting the first and second opposite sides (S1, S2).

The clamp portion 11 has a bracing member 110 adapted to embrace one end of the handle bar 200, a clamp hole 111 defined by the embracing member 110 and adapted to receive the end of the handle bar 200, and a clamp screw 112. The embracing member 110 has a substantially C-shaped cross section, and includes a fixed end 113, a movable end 114, and a gap 115 between the fixed and movable ends 113, 114. The clamp screw 112 passes through the gap 115 and engages threadedly the movable end 114 and the fixed end 113. The clamp hole 111 extends through the third and fourth sides (S3, S4) of the handle body 1.

The battery mounting chamber 21 is disposed inside the handle body 1 between the opposite ends of the handle body 1. A set of battery cells 23 is mounted inside the battery mounting chamber 21.

The headlight 31 is mounted inside the handle body 1 near the other end of the handle body 1 opposite to the clamp portion 11, and is connected electrically to the battery cells 23. A headlight switch 32 is disposed on the handle body 1 near the other end of the handle body 1 opposite to the clamp portion 11 and is connected electrically to the headlight 31. The headlight switch 32 controls the headlight 31 to illuminate the road in front of the bicycle, or to flash continually for warning indication.

The turning light 41 is disposed in the handle body 1 in proximity to the clamp hole 111, and a turning light switch 42 is disposed on the handle body 1 near the headlight switch 32 and is connected electrically to the turning light 41. The turning light switch 42 controls the operation of the turning light 41. The turning light 41 is used to indicate the rider' s intention for making a turn, and can be operated to flash continually or to illuminate continuously.

The headlight 31 is arranged to emit light from the second side (S2) of the handle body 1. The turning light 41 is arranged to emit light from the third side (S3) of the handle body 1. The headlight and turning light switches 32, 42 are disposed on the first side (S1) of the handle body 1.

Preferably, the handle body 1 is constructed to have a main body 101 and a lid 102. The battery mounting chamber 21, the headlight 31, the turning light 41, and the headlight and turning light switches 32, 42 are disposed in the main body 101. The main body 101 has an opening 103 in the second side (S2) to expose the battery mounting chamber 21 and the headlight 31. The lid 102 covers the opening 103. The handle body 1 further has a cover 43 fixed in the clamp hole 111 to cover the clamp hole 111 and the turning light 41 at the third side (S3). The cover 43 has a plug portion 431 inserted into the clamp hole 111, and a covering portion 432 covering the turning light 41 and the clamp hole 111. At least a part of the cover 43 can guide and emit light from the turning light 41. The cover 43 may be made partially or completely from a light guide material.

Because the headlight 31 and the turning light 41 can be controlled through the headlight switch 32 and the turning light switch 42 that are disposed on the bicycle handle, the headlight 31 and the turning light 41 can be switched and operated conveniently and synchronously by a rider.

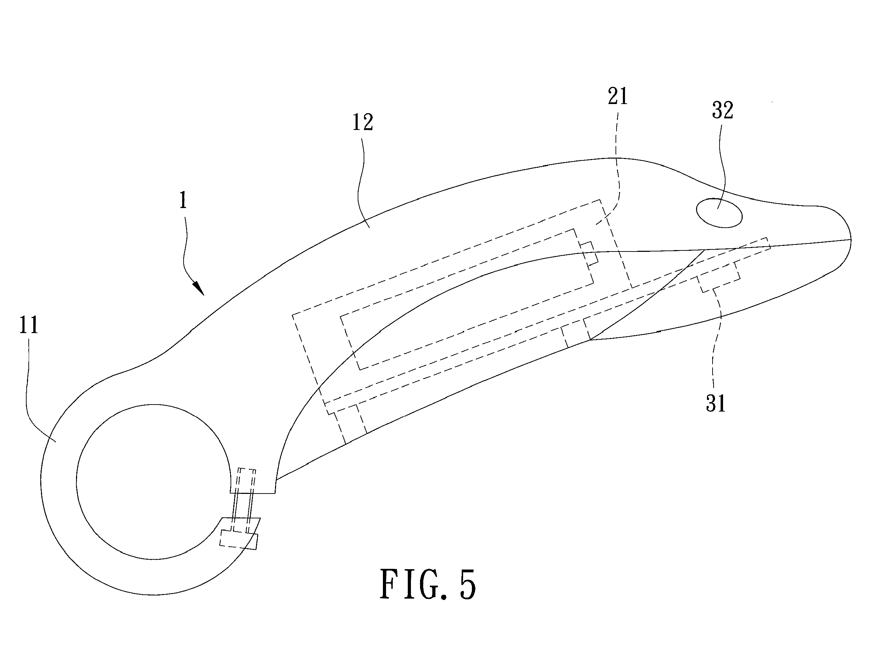

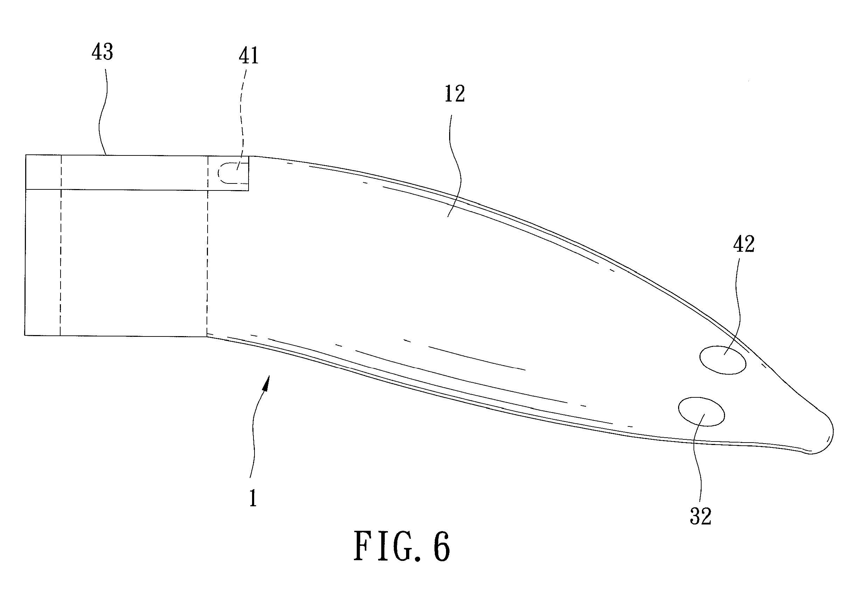

Referring to Figures 5 and 6, like the first preferred embodiment, a second preferred embodiment of the present invention includes the handle body 1, the battery mounting chamber 21, the headlight 31, the turning light 41, the headlight switch 32, the turning light switch 42, and the cover 43. However, the shape of the second embodiment differs from that of the first preferred embodiment.

## Claims

1. An illuminating bicycle auxiliary handle **characterized by**:
a handle body (1) having two opposite ends, a clamp portion (11) disposed at one of said ends and adapted for attachment to a handle bar (200) of a bicycle, and a grip portion (12) disposed between said opposite ends;
a battery mounting chamber (21) disposed inside said handle body (1) between said opposite ends;
a headlight (31) mounted inside said handle body (1) proximate to the other one of said opposite ends; and
a headlight switch (32) disposed on said handle body (1) proximate to said other one of said opposite ends and connected electrically to said headlight (31).

2. The illuminating bicycle auxiliary handle as claimed in Claim 1, further **characterized by** a turning light (41) disposed in said handle body (1) near said clamp portion (12), and a turning light switch (42) disposed on said handle body (1) near said headlight switch (32) and connected electrically to said turning light (41).

3. The illuminating bicycle auxiliary handle as claimed in Claim 2, **characterized in that** said handle body (1) has first and second opposite sides ((S1, S2) connected between said opposite ends of said handle body (1) , and third and fourth opposite sides (S3, S4) interconnecting said first and second opposite sides (S1, S2), said clamp portion (11) having a clamp hole (111) adapted to receive one end of the handle bar (200), said clamp hole (111) extending through said third and fourth sides (S3, S4), said headlight (31) emitting light from said second side (S2), said turning light (41) emitting light from said third side (S3) .

4. The illuminating bicycle auxiliary handle as claimed in Claim 3, **characterized in that** said turning light (41) is disposed in proximity to said clamp hole (111), and said handle body (1) further has a cover (43) covering said clamp hole (111) and said turning light (41) at said third side (S3), at least a part of said cover (43) being made from a light guide material to guide and emit light from said turning light (41).

5. The illuminating bicycle auxiliary handle as claimed in Claim 3, **characterized in that** said headlight and turning light switches (32, 42) are disposed on said first side (S1).

6. The illuminating bicycle auxiliary handle as claimed in Claim 3, **characterized in that** said handle body (1) includes a main body (101) and a lid (102), said main body (101) having an opening (103) in said second side (S2) to expose said battery mounting chamber (21) and said headlight (S1), said lid (102) covering said opening (103).

7. The illuminating bicycle auxiliary handle as claimed in Claim 3, **characterized in that** said clamp portion (11) further has an embracing member (110) of substantially C-shaped cross section confining said clamp hole (111) and adapted to embrace the end of the handle bar (200), and a clamp screw (112), said embracing member (110) having a fixed end (113), a movable end (114), and a gap (115) between said fixed and movable ends (113, 114), said clamp screw (112) passing through said gap (115) and engaging threadedly said movable end (114) and said fixed end (113).
